(19) Europäisches Patentamt
European Patent Office
Office européen des brevets

(11) Veröffentlichungsnummer : **0 074 337**
**B1**

(12) **EUROPÄISCHE PATENTSCHRIFT**

(45) Veröffentlichungstag der Patentschrift : **05.03.86**

(51) Int. Cl.$^4$ : **C 08 L 67/02**, C 08 L 67/04, C 08 K 5/15, C 08 K 5/20, C 08 K 5/34

(21) Anmeldenummer : **82810365.5**

(22) Anmeldetag : **03.09.82**

# (54) Stabilisierte thermoplastische Polyesterformmasse.

(30) Priorität : **09.09.81 CH 5822/81**

(43) Veröffentlichungstag der Anmeldung : **16.03.83 Patentblatt 83/11**

(45) Bekanntmachung des Hinweises auf die Patenterteilung : **05.03.86 Patentblatt 86/10**

(84) Benannte Vertragsstaaten : **CH DE FR GB IT LI NL**

(56) Entgegenhaltungen :
**DE-A- 2 501 988**
**DE-A- 2 519 583**
**DE-A- 2 556 317**
**DE-B- 1 285 747**
**US-A- 4 022 752**
**Patent Abstracts of Japan, Band 5, Nr. 200, 18. Dezember 1981**
**Patent Abstracts of Japan, Band 5, Nr. 94, 19. Juni 1981**

**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Buxbaum, Lothar, Dr.**
**Moosschmiedenweg 43**
**A-9500 Villach/Sankt Georgen (AT)**
Erfinder : **Breitenfellner, Franz, Dr.**
**Im Entich 9a**
**D-6140 Bensheim 1 (DE)**
Erfinder : **Kainmüller, Thomas, Dr.**
**Am Kümmelberg 1**
**D-6145 Lindenfels/Odenwald (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 074 337 B1

**Beschreibung**

Die vorliegende Erfindung betrifft eine Formmasse auf Basis thermoplastischer Polyester, die mit einer Polyepoxidverbindung und einem zweiten Stabilisator gegen den thermischen Abbau stabilisiert ist.

Thermoplastische Polyester sind wertvolle Formmassen zur Herstellung von Gebrauchsgegenständen aller Art. Bedingt durch die relativ hohen Schmelztemperaturen müssen Polyester bei hohen Temperaturen verarbeitet werden, wobei die Viskosität und damit das Molekulargewicht der Polyester erheblich erniedrigt wird. Eine hohe Viskosität im Formteil ist jedoch für gute mechanische Eigenschaften, besonders für gute Zähigkeitseigenschaften erforderlich. Es kann dem Problem nicht damit begegnet werden, dass man Polyester mit sehr hohen Viskositäten einsetzt. Dies ist zum einen durch die Herstellung unwirtschaftlich und ferner ist die Verarbeitung durch die hohe Schmelzviskosität beeinträchtigt.

Es sind daher schon verschiedene Stabilisatoren gegen den thermischen Abbau vorgeschlagen worden, unter anderen auch Polycarbodiimide (DE-A-1 285 747) und Polyepoxidverbindungen (DE-A-2 556 317). Obwohl hiermit ein zu starker Abbau verhindert wird, genügen diese Stabilisatoren noch nicht den Anforderungen in der Praxis.

Es ist die Aufgabe vorliegender Erfindung, den Molekulargewichtsabbau von thermoplastischen Polyestern während der Verarbeitung noch stärker zu unterdrücken.

Gegenstand vorliegender Erfindung ist eine Formmasse auf Basis eines thermoplastischen Polyesters, enthaltend wirksame Mengen von mindestens 2 Stabilisatoren, von denen der erste eine Polyepoxidverbindung ist, dadurch gekennzeichnet, daß der erste Stabilisator eine Polyepoxidverbindung mit durchschnittlich mehr als einer Epoxidgruppe im Molekül ist und der zweite zur Gruppe der Bisoxazoline der Formel I

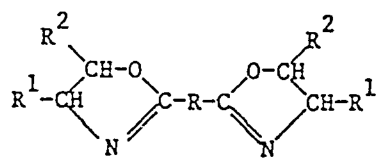

(I)

und der Dicarbonsäure-bis-imide und -bis-amide der Formel II

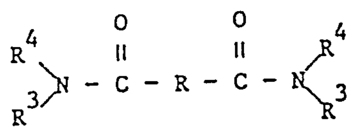

(II)

gehört, worin

R Alkylen, Cycloalkylen, unsubstituiertes oder durch Halogen substituiertes Arylen ist,

$R^1$ und $R^2$ unabhängig voneinander ein Wasserstoffatom, Aryl, Cycloalkyl oder Alkyl bedeuten,

$R^3$ Alkyl, Cycloalkyl, unsubstituiertes oder durch Alkyl oder Halogen substituiertes Aryl oder Aralkyl und $R^4$ Acyl oder $R^3$ und $R^4$ zusammen einen Rest der Formel $-C_nH_{2n}CO-$, worin n eine Zahl von 2 bis 12 ist, bedeuten, oder

$R^3$ und $R^4$ zusammen ein Rest der Formel

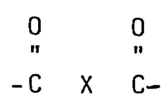

sind, worin X unsubstituiertes oder durch Alkyl substituiertes Aethylen oder Aethenylen oder ein unsubstituierter oder durch Alkyl oder Halogen substituierter carbocyclischer Rest, an den beide Carbonylgruppen in Orthostellung gebunden sind, ist, oder $R^3$ und $R^4$ zusammen einen Rest der Formel

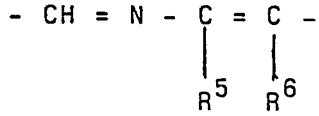

worin $R^5$ und $R^6$ unabhängig voneinander ein Wasserstoffatom, Alkyl, Cycloalkyl, Aryl oder Aralkyl sind, bedeuten.

Für die erfindungsgemässen Formmassen geeignete lineare thermoplastische Polyester sind bevorzugt kristallin bzw. teilkristallin und weisen in diesem Fall insbesondere Schmelzpunkte von mindestens 150 °C auf. Sie können jedoch auch in amorpher Form vorliegen, wobei dann der Polyester bevorzugt eine Glasumwandlungstemperatur von mindestens 70 °C, besonders mindestens 100 °C,

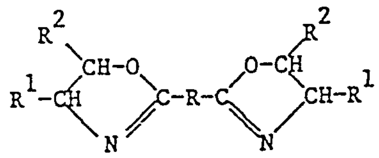

(I)

et les bis-imides et bis-amides d'acides dicarboxyliques de formule II :

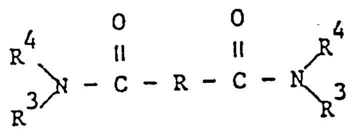

(II)

formules dans lesquelles :

R représente un alkylène, un cycloalkylène ou un arylène, ce dernier étant dépourvu de substituant ou portant un halogène,

$R^1$ et $R^2$ représentent chacun, indépendamment l'un de l'autre, un atome d'hydrogène, un aryle, un cycloalkyle ou un alkyle,

$R^3$ représente un alkyle, un cycloalkyle, un aryle ou un aralkyle, ces deux derniers ne portant pas de substituant ou portant un alkyle ou un halogène, et

$R^4$ représente un acyle, ou

$R^3$ et $R^4$ forment ensemble un radical de formule $—C_nH_{2n}—CO—$ dans lequel n désigne un nombre de 2 à 12,

$R^3$ et $R^4$ forment ensemble un radical de formule :

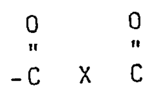

dans lequel X représente un radical éthylène ou éthénylène non substitué ou porteur d'un alkyle, ou représente un radical carbocyclique qui ne porte pas de substituant ou qui porte un alkyle ou un halogène et qui est relié en ortho aux deux radicaux carbonyles, ou $R^3$ et $R^4$ forment ensemble un radical de formule

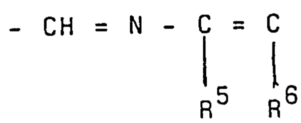

dans lequel $R^5$ et $R^6$ représentent chacun, indépendamment l'un de l'autre, un atome d'hydrogène, un alkyle, un cycloalkyle, un aryle ou un aralkyle.

2. Matière à mouler selon la revendication 1 caractérisée en ce que le polyester est un poly-(téréphtalate d'alkylène) ou un copolyester à base d'un poly-(téréphtalate d'alkylène).

3. Matière à mouler selon la revendication 1 caractérisée en ce que le premier stabilisant et le second stabilisant y sont contenus chacun en une quantité de 0,01 à 10 % en poids par rapport au polyester.

4. Matière à mouler selon la revendication 1 caractérisée en ce que le composé polyépoxydique est à base de bis-phénols.

5. Matière à mouler selon la revendication 1 caractérisée en ce que, dans les formules I et II, R représente un alkylène contenant de 2 à 12 atomes de carbone, un cycloalkylène dont le cycle contient de 5 à 7 atomes de carbone ou un arylène contenant de 6 à 12 atomes de carbone et l'halogène, substituant éventuel, est le chlore ou le brome.

6. Matière à mouler selon la revendication 1 caractérisée en ce que $R^1$ ou $R^2$ représente, en tant qu'aryle, un phényle, en tant que cyclo-alkyle un cyclohexyle, et en tant qu'alkyle un alkyle contenant de 1 à 6 atomes de carbone.

7. Matière à mouler selon la revendication 1 caractérisée en ce que $R^3$ contient, en tant qu'alkyle, de 1 à 12 atomes de carbone, en tant que cycloalkyle de 5 à 7 atomes C dans son cycle, en tant qu'aryle non substitué de 6 à 12 atomes de carbone, et en tant qu'aralkyle de 7 à 12 atomes de carbone, l'éventuel substituant alkyle porté par $R^3$ contient de 1 à 6 atomes de carbone, l'éventuel halogène porté par $R^3$ est un atome de chlore ou de brome, $R^4$ contient, en tant qu'acyle, de 2 à 18 atomes de carbone, l'indice n dans la formule $—C_nH_{2n}CO—$ est un nombre de 3 à 8, le symbole X dans la formule

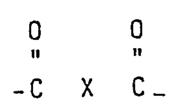

représente un radical éthylène non substitué ou porteur d'un ou de deux alkyles en $C_1$-$C_{12}$, un radical éthénylène non substitué ou porteur d'un ou de deux alkyles en $C_1$-$C_6$, ou un radical cyclohexylène, cyclopentylène, cyclohexénylène, phénylène ou naphtylène non substitué ou porteur d'un alkyle en $C_1$-$C_6$ ou d'un atome de chlore ou de brome, et $R^5$ et $R^6$ représentent chacun un alkyle contenant de 1 à 6 atomes de carbone, un cycloalkyle dont le noyau contient de 5 à 7 atomes de carbone, un phényle (en tant qu'aryle) ou un benzyle (en tant qu'aralkyle).

8. Matière à mouler selon la revendication 1 caractérisée en ce qu'elle contient, comme second stabilisant de formule I, la bis-oxazoline de formule :

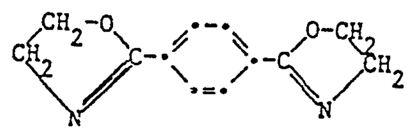

9. Matière à mouler selon la revendication 1 caractérisée en ce qu'elle contient, comme second stabilisant, le composé imidique de formule :

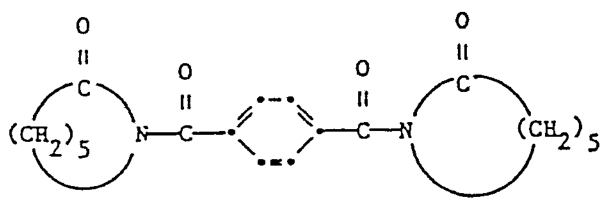

aufweist. Die Intrinsic Viskosität der Polyester beträgt bevorzugt mindestens 0,6 dl/g, insbesondere mindestens 0,8 dl/g.

Bei den Polyestern kann es sich um Homo- oder Mischpolyester handeln, die aus aliphatischen, cycloaliphatischen oder aromatischen Dicarbonsäuren und Diolen oder Hydroxycarbonsäuren aufgebaut sind. Ferner sind auch Mischungen dieser Polyester geeignet. Ihre Zusammensetzung richtet sich im wesentlichen nach den gewünschten Eigenschaften für einen bestimmten Verwendungszweck.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome, die aliphatischen Hydroxycarbonsäuren 2 bis 12 C-Atome und die aromatischen wie cycloaliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten.

Als aromatische Diole werden jene bezeichnet, bei denen zwei Hydroxygruppen an einen oder verschiedene aromatische Kohlenwasserstoffreste gebunden sind.

Ferner ist es möglich, dass die Polyester mit geringen Mengen, z. B. 0,1 bis 3 Mol%, bezogen auf die vorhandenen Dicarbonsäuren, mehr als zweifunktionellen Monomeren (z. B. Pentaerythrit oder Trimellitsäure) verzweigt sind.

Bei Polyestern aus mindestens 3 Monomeren können diese statistisch verteilt sein oder es kann sich um Blockpolymere handeln.

Geeignete Dicarbonsäuren sind lineare und verzweigte gesättigte aliphatische Dicarbonsäuren, aromatische Dicarbonsäuren und cycloaliphatische Dicarbonsäuren.

Als aliphatische Dicarbonsäuren kommen jene mit 2 bis 40 C-Atome in Frage, z. B. Oxalsäure, Malonsäure, Dimethylmalonsäure, Bernsteinsäure, Octadecylbernsteinsäure, Pimelinsäure, Adipinsäure, Trimethyladipinsäure, Sebacinsäure, Azalainsäure und Dimersäuren (Dimerisationsprodukte von ungesättigten aliphatischen Carbonsäuren wie Oelsäure).

Als cycloaliphatische Dicarbonsäuren kommen in Frage :

1,3-Cyclobutandicarbonsäure, 1,3-Cyclopentandicarbonsäure, 1,3- und 1,4-Cyclohexandicarbonsäure, 1,3- und 1,4-(Dicarboxylmethyl)-cyclohexan, 4,4'-Dicyclohexyldicarbonsäure.

Als geeignete aromatische Dicarbonsäuren kommen in Frage :

Insbesondere Terephthalsäure, Isophthalsäure, Phthalsäure, sowie 1,3-, 1,4-, 2,6- oder 2,7-Naphthalindicarbonsäure. 4,4'-Diphenyldicarbonsäure, 4,4'-Diphenylsulfoncarbonsäure, 1,1,3-Trimethyl-5-carboxyl-3-(p-carboxylphenyl)-indan, 4,4'-Diphenylätherdicarbonsäure, Bis-p-(carboxylphenyl)methan.

Bevorzugt sind die aromatischen Dicarbonsäuren, unter ihnen besonders Terephthalsäure, Isophthalsäure und Orthophthalsäure.

Weitere geeignete Dicarbonsäuren sind jene, die —CO—NH-Gruppen enthalten ; sie sind in der DT-OS 2 414 349 beschrieben. Auch Dicarbonsäuren, die N-heterocyclische Ringe enthalten, sind geeignet, z. B. solche, die sich von carboxylalkylierten, carboxylphenylierten oder carboxybenzylierten Monoamins-triazindicarbonsäuren (vgl. DT-OS 2 121 184 und 2 533 675), Mono- oder Bishydantoinen, gegebenenfalls halogenierten Benzimidazolenen oder Parabansäure ableiten. Die Carboxylalkylgruppe kann hierbei 3 bis 20 C-Atome enthalten.

Geeignete aliphatische Diole sind die linearen und verzweigten aliphatischen Glykole, besonders die mit 2 bis 12, insbesondere 2 bis 6 Kohlenstoffatomen im Molekül, z. B. :

Aethylenglykol, 1,2- und 1,3-Propylenglykol, 1,2-, 1,3-, 2,3- oder 1,4-Butandiol, Pentylglykol, Neopentylglykol, 1,6-Hexandiol, 1,12-Dodecandiol. Ein geeignetes cycloaliphatisches Diol ist z. B. 1,4-Dihydroxycyclohexan. Weitere geeignete aliphatische Diole sind z. B. 1,4-Dihydroxymethylcyclohexan, aromatisch-aliphatische Diole wie p-xylylenglykol oder 2,5-Dichlor-p-xylylenglykol, 2,2-(β-Hydroxyäthoxyphenyl)-propan sowie Polyoxaalkylenglykol wie Diäthylenglykol, Triäthylenglykol oder Polyäthylenglykol. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Dihydroxymethylcyclohexan. Insbesondere bevorzugt sind Athylenglykol und 1,4-Butandiol.

Weitere geeignete aliphatische Diole sind die β-hydroxyalkylierten, besonders β-hydroxyäthylierten Bisphenole wie 2,2-Bis-[4'-(β-hydroxyäthoxy)-phenyl]-propan. Weitere Bisphenole sind später genannt.

Eine weitere Gruppen von geeigneten aliphatischen Diolen sind die in den deutschen Offenlegungsschriften 1 812 003, 2 342 432, 2 342 372 und 2 453 326 beschriebenen heterocyclischen Diole. Beispiele sind :

N,N'-Bis(β-hydroxyäthyl-5,5-dimethyl)-hydantoin, N,N'-Bis-(β-hydroxypropyl-5,5-dimethyl)-hydantoin, Methylen-bis-[N-(β-hydroxyäthyl)-5-methyl-5-äthylhydantoin], Methylen-bis-[N-(β-hydroxyäthyl)-5,5-dimethylhydantoin], N,N'-Bis-(β-hydroxyäthyl)-benzimidazolon, -(tetrachlor)-benzimidazolon oder -(tetrabrom)-benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoff-aromatische Reste wie z. B. Phenylen oder Naphthylen verstanden. Neben z. B. Hydrochinon sind besonders die Bisphenole zu nennen, die durch die folgende Formel dargestellt werden können :

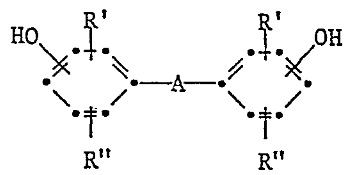

Die Hydroxylgruppen können sich in m-Stellung, besonders aber in p-Stellung befinden. R' und R" können in dieser Formel Alkyl mit 1 bis 6 C-Atomen, Halogen wie Chlor oder Brom und insbesondere Wasserstoffatome bedeuten. A kann für eine direkte Bindung stehen, oder 0, S, $S0_2$, gegebenenfalls substituiertes Alkyliden, Cycloalkyliden oder Alkylen bedeuten.

Beispiele für gegebenenfalls substituierte Alkyliden sind :

Aethyliden, 1,1- oder 2,2-Propyliden, 2,2-Butyliden, 1,1-Isobutyliden, Pentyliden, Hexyliden, Heptyliden, Octyliden, Dichloräthyliden, Trichloräthyliden.

Beispiele für gegebenenfalls substituiertes Alkylen sind Methylen, Aethylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiele für Bisphenole sind :

Bis-(p-hydroxyphenyl)-äther oder -thioäther, Bis-(p-hydroxyphenyl)-sulfon, Bis-(p-hydroxyphenyl)-methan, 1,2-Bis-(p-hydroxyphenyl)-äthan, 1-Phenyl-bis-(p-hydroxyphenyl)-methan, Diphenyl-bis-(p-hydroxyphenyl)-methan, Diphenyl-bis-(p-hydroxyphenyl)-methan, 2,2-Bis-(4'-hydroxy-3'-dimethylphenyl)-propan, 1,1- oder 2,2-Bis-(p-hydroxyphenyl)-butan, 1,1-Dichlor- oder 1,1,1-Trichlor-2,2-bis-(p-hydroxyphenyl)-äthan, 1,1-Bis-(p-hydroxyphenyl)-cyclopentan und besonders 2,2-Bis-(p-hydroxyphenyl)-propan (Bisphenol-A) und 1,1-Bis-(p-hydroxyphenyl)-cyclohexan (Bisphenol-C).

Geeignete Polyester von Hydroxycarbonsäuren sind z. B. Polycaprolacton, Polypivalolacton oder die Polyester von 4-Hydroxycyclohexancarbonsäure oder 4-Hydroxybenzoesäure.

Polyester mit aromatischen Dicarbonsäuren haben die grösste Bedeutung erlangt, insbesondere die Polyalkylenterephthalate, Bevorzugt sind daher erfindungsgemässe Formmassen, in denen der Polyester aus mindestens 30 Mol%, bevorzugt mindestens 40 Mol%, aromatischen Dicarbonsäuren und zu mindestens 30 Mol%, vorzugsweise mindestens 40 Mol%, aus Alkylendiolen mit bevorzugt 2 bis 12 C-Atomen aufgebaut ist, bezogen auf den Polyester.

Insbesondere ist in diesem Fall das Alkylendiol linear und enthält 2 bis 6 C-Atome, wie z. B. Aethylen-, Tri-, Tetra- oder Hexamethylenglykol und die aromatische Dicarbonsäure Terephthal- und/oder Isophthalsäure. Besonders bevorzugt sind als Polyester Polyäthylen- und Poly-1,4-butylenterephthalat sowie Copolyester auf der Basis von Polyäthylen- und Poly-1,4-butylentetrephthalat.

Als Polyepoxidverbindungen kommen für die erfindungsgemässen Formmassen vor allem solche mit durchschnittlich mehr als einer an ein Heteroatom (z. B. Schwefel, vorzugsweise Sauerstoff oder Stickstoff) gebundenen Glycidylgruppe, β-Methylglycidylgruppe oder 2,3-Epoxycyclopentylgruppe in Frage ; genannt seien insbesondere Bis-(2,3-epoxycyclopentyl)-äther ; Di- bzw. Polyglycidyläther von mehrwertigen aliphatischen Alkoholen, wie 1,4-Butandiol, oder Polyalkylenglykolen, wie Polypropylenglykole ; Di- oder Polyglycidyläther von cycloaliphatischen Polyolen, wie 2,2-Bis-(4-hydroxycyclohexyl)-propan ; Di- bzw. Polyglycidyläther von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5-dibromphenyl)-propan, 1,1,2,2-Tetrakis-(p-hydroxylphenyl)-äthan, oder von unter sauren Bedingungen erhaltenen Kondensationsprodukten von Phenolen mit Formaldehyd, wie Phenol-Novolake und Kresol-Novolake ; Di- bzw. Poly-(β-methylglycidyl)-äther der oben angeführten mehrwertigen Alkohole oder mehrwertigen Phenole ; Polyglycidylester von mehrwertigen Carbonsäuren, wie Phthalsäure, Terephthalsäure, Δ4-Tetrahydrophthalsäure und Hexahydrophthalsäure ; N-Glycidylderivate von Aminen, Amiden und heterocyclischen Stickstoffbasen, wie N,N-Diglycidylanilin, N,N-Diglycidyltoluidin, N,N,N',N'-Tetraglycidyl-bis-(p-amino-phenyl)-methan ; Triglycidyl-isocyanuarat ; N,N'-Diclycidyläthylenharnstoff, N,N'-Diglycidyl-5,5-dimethylhydantoin, N,N'-Diglycidyl-5-isopropyl-hydantoin ; N,N'-Diglycidyl-5,5-dimethyl-6-isopropyl-5,6-dihydro-uracil.

Bevorzugt sind die Di- bzw. Polyglycidyläther von mehrwertigen Phenolen, insbesondere jene der zuvor definierten aromatischen Diole.

Der erste und der zweite Stabilisator können jeweils in einer Menge von 0,01 bis 10, vorzugsweise 0,01 bis 5 und insbesondere 0,1 bis 3 Gew.-% enthalten sein, bezogen auf den Polyester.

R in den Formeln I und II enthält in seiner Bedeutung als lineares oder verzweigtes Alkylen bevorzugt 2 bis 12, besonders 2 bis 6 C-Atome, in seiner Bedeutung als Cycloalkylen bevorzugt 5 bis 7, insbesondere 6 Ring-C-Atome und in seiner Bedeutung als Arylen 6 bis 12 C-Atome. Cycloalkylen ist besonders Cyclohexylen und Arylen besonders Phenylen und Naphthylen. Der Halogensubstituent ist bevorzugt Chlor oder Brom. Ferner sind m- und p-Cyclohexylen m- und p-Phenylen bevorzugt.

$R^1$ und $R^2$ in ihrer Bedeutung als Aryl sind besonders Phenyl, in ihrer Bedeutung als Cycloalkyl, Cyclohexyl und enthalten in ihrer Bedeutung als Alkyl besonders 1 bis 6 C-Atome. Insbesondere bedeuten $R^1$ und $R^2$ ein Wasserstoffatom. Besonders bevorzugt sind Verbindungen der Formel I, in der $R^1$ und $R^2$ ein Wasserstoffatom und R m- oder besonders p-Phenylen ist.

$R^3$ als Alkyl enthält besonders 1 bis 12, besonders 1 bis 6 C-Atome, als Cycloalkyl 5 bis 7 Ring-C-Atome, als Aryl 6 bis 12 C-Atome, als Aralkyl 7 bis 12 C-Atome. Alkyl- und Halogensubstituenten in $R^3$ enthalten bevorzugt 1 bis 6 C-Atome, oder sind Chlor oder Brom. Cycloalkyl ist besonders Cyclohexyl, Aryl besonders Phenyl und Aralkyl besonders Benzyl.

$R^4$ als Acyl enthält bevorzugt 2 bis 18, besonders 2 bis 12 C-Atome. Es entspricht besonders der Formel $R^7CO$-, worin $R^7$ lineares oder verzweigtes Alkyl oder Alkenyl, Cycloalkyl mit besonders 5 bis 7 Ring C-Atomen, Aryl, besonders Phenyl und Naphthyl, oder Aralkyl, besonders Benzyl oder α- oder β-Phenyläthyl, ist.

Eine bevorzugte Gruppe von Verbindungen der Formel II ist jene, in der $R^3$ und $R^4$ zusammen einen Rest $C_nH_{2n}CO$— bedeutet. Der $C_nH_{2n}$-Rest kann verzweigt sein, ist aber bevorzugt linear. Bevorzugt ist n eine Zahl von 3 bis 8. Insbesondere ist der $C_nH_{2n}$-Rest 1,4-Butylen oder 1,5-Pentylen. Eine besonders bevorzugte Verbindung ist

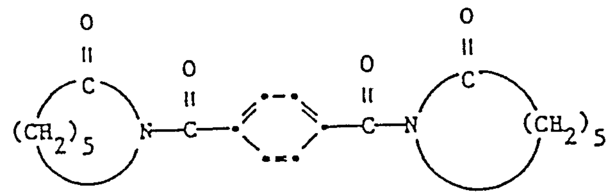

Wenn $R^3$ und $R^4$ zusammen einen Rest der Formel

$$-\overset{O}{\overset{\|}{C}}\ X\ \overset{O}{\overset{\|}{C}}-$$

bedeuten, kann X bevorzugt unsubstituiertes Alkylen oder durch ein oder zwei Alkylgruppen substituiertes, bevorzugt in 1,2-Stellung, mit 1 bis 12, besonders 1 bis 6 C-Atomen sein. X ist ferner bevorzugt unsubstituiertes Aethylen oder mit 1 bis 2 Alkylgruppen mit 1 bis 6 C-Atomen, besonders in 1,2-Stellung, substituiertes Aethenylen. Bei den carbocyclischen Resten kann es sich um Cycloalkylen oder Cycloalkenylen mit 4 bis 12, vorzugsweise 5 bis 8 Ringkohlenstoffatomen und um aromatische Kohlenwasserstoffreste mit 6 bis 12 Ringkohlenstoffatomen handeln. Unter den carbocyclischen Resten ist X bevorzugt Cyclopentylen, Cyclohexylen, Phenylen und Naphthylen, die mit $C_1$-$C_6$-Alkyl, Chlor oder Brom substituiert sein können.

Eine bevorzugte Untergruppe von Verbindungen der Formel II mit $R^3$ und $R^4$ zusammen gleich

$$-\overset{O}{\overset{\|}{C}}\ X\ \overset{O}{\overset{\|}{C}}-$$

sind solche der Formel

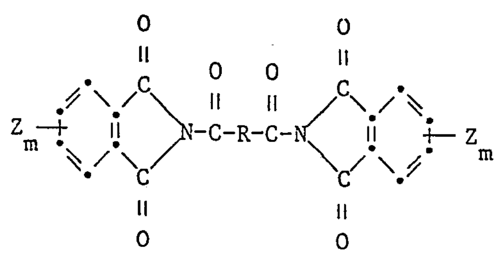

worin R besonders Alkylen und insbesondere Arylen, z. B. m- oder p-Phenylen, Z Chlor oder Brom und m 0 oder eine Zahl von 1 bis 4 ist.

Wenn $R^3$ und $R^4$ in Formel II zusammen einen Rest der Formel

$$-CH=N-\underset{R^5}{\underset{|}{C}}=\underset{R^6}{\underset{|}{C}}-$$

bedeuten, handelt es sich um Dicarbonsäurebisimidazolide. $R^5$ und $R^6$ enthalten als Alkyl bevorzugt 1 bis 6 C-Atome, als Cycloalkyl bevorzugt 5 bis 7 Ring C-Atome, als Aryl bevorzugt Phenyl und als Aralkyl bevorzugt Benzyl. Insbesondere sind $R^5$ und $R^6$ je ein Wasserstoffatom.

Beispiele für Alkyl sind : Methyl, Aethyl, Propyl, i-Propyl, Butyl, i-Butyl, t-Butyl, 1-Pentyl, 2-Pentyl, 3-Pentyl, Hexyl, 2-Hexyl, 3-Hexyl, Heptyl, Octyl, 2-Aethylhexyl, Nonyl, Decyl, Undecyl, Dodecyl, Hexadecyl, Octadecyl.

Beispiele für Cycloalkyl sind : Cyclopentyl, Methylcyclopentyl, Cyclohexyl, Methylcyclohexyl, Aethylcyclohexyl, Cycloheptyl, Cyclooctyl.

Beispiele für Aryl und Aralkyl sind : Phenyl, Naphthyl, Chlorphenyl, Dichlorphenyl, Bromphenyl, Methylphenyl, Dimethylphenyl, Aethylphenyl, Butylphenyl, Hexylphenyl, Nonylphenyl, Benzyl, α- und β-Phenyläthyl, 3-Phenylpropyl, Methylbenzyl, Aethylbenzyl, Methylphenyläthyl, Chlorbenzyl.

Beispiele für Alkylen sind : Methylen, Aethylen, 1,2- oder 1,3-Propylen, 1,2-, 1,3- oder 1,4-Butylen, Pentylen, Hexylen, Octylen, 2-Aethylhexylen, Decylen, Dodecylen. Beispiele für Cycloalkylen sind Cyclopentylen, Methylcyclopentylen, Cyclohexylen, Methylcyclohexylen, Cycloheptylen, Cyclooctylen.

Beispiele für Arylen sind o-, m- und p-Phenylen, 1,2- oder 1,6-Naphthylen, Chlorphenylen, Dichlorphenylen.

Beispiele für X sind : Aethylen, Methyläthylen, 1,2-Dimethyläthylen, Propyläthylen, Hexyläthylen, Octyläthylen, Decyläthylen, Dodecyläthylen, Aethenylen, Methyl-, 1,2-Dimethyl- oder Butyläthenylen, 1,2-Cyclohexenylen-1,2, Cyclohexylen, Methylcyclohexylen, o-Phenylen, o-Naphthylen, Mono-, Di-, Tri- oder Tetrachlor- oder -brom-o-phenylen.

Die als Zweitstabilisatoren eingesetzten Verbindungen sind bekannt oder können nach bekannten analogen Verfahren hergestellt werden.

Die erfindungsgemässe Formmasse kann zusätzlich einen verstärkenden (faserförmigen) Füllstoff enthalten, z. B. Asbestfasern, Kohlenstofffasern oder insbesondere Glasfasern. Die Gesamtmenge an verstärkendem Füllstoff beträgt 5 bis 60, vorzugsweise 10 bis 40 Gew.-%, bezogen auf die Gesamtmasse. Die Füllstoffe können mit einem Haftvermittler beschichtet sein, um deren Bindung an den Polyester zu verbessern.

Die erfindungsgemässe Formmasse kann auch zusätzlich 3 bis 25 Gew.-%, vorzugsweise 8 bis 20 Gew.-%, bezogen auf den Polyester, eines flammhemmenden Zusatzes enthalten.

Geeignete flammhemmende Zusätze sind z. B. organische Halogenverbindungen, besonders Chlor- oder Bromverbindungen, die alleine oder zusammen mit synergistisch wirkenden Verbindungen mit Elementen der fünften Hauptgruppe des Periodensystems, besonders von Phosphor- und Antimonverbindungen, insbesondere Antimontrioxid, verwendet werden.

Flammschutzmittel auf der Basis von organischen chlor- und/oder besonders bromhaltigen Verbindungen sind bekannt. Es kann sich hierbei um solche handeln, die dem Kunststoff als Mischkomponente einverleibt sind, oder um solche, die als reaktive Monomere in die Polymermoleküle eingebaut sind. Beispiele für letztere sind Tetrachlorphthalsäureanhydrid, Dichlortetraphthalsäure oder deren Niederalkylester, Tetrabromphthalsäureanhydrid, Tetrabrombisphenol-A, N,N'-Bis-(β-hydroxyäthyl)-tetrachlor- oder tetrabrombenzimidazolon.

Weitere Beispiele für chlor- und/oder bromhaltige Verbindungen sind :

Polytribromstyrol, Polypentabromstyrol, Decabromdiphenyl, Tetrabromdiphenyl, Hexabromdiphenyläther, Octabromdiphenyläther, Decabromdiphenyläther, Tetrabromdiphenylsulfid, Hexabromdiphenylsulfon, 3-(2',4',6'-Tribromphenoxy)-1,2-propandiol, Di- oder Tetrabromphthalsäure bzw. deren Anhydride, Dibromterephthalsäure, hydroxyäthyliertes Di- oder Tetrabrombisphenol-A, Tetrabrom-1,4-(dihydroxymethyl)-benzol, Tetrabrombenzimidazolon, N,N'-Alkylen-bis-tetrabromphthalimid sowie die chloranalogen Verbindungen. Weitere organische Halogenverbindungen sind z. B. in der deutschen Offenlegungsschrift 2 242 450 beschrieben.

Die thermoplastischen Polyester sind bekannt und handelsüblich oder sie können nach bekannten Polykondensationsverfahren der Technik hergestellt werden.

Die Herstellung der erfindungsgemässen Formmassen erfolgt ebenfalls nach in der Technik üblichen Methoden durch Einarbeiten der Zusätze in den thermoplastischen Polyester während oder nach der Polykondensation durch Zugabe zu der Reaktionsmasse bzw. dem schmelzflüssigen Polyester oder durch Umgranulieren.

Es können auch weitere übliche Zusätze zugegeben werden, z. B. weitere Füllstoffe wie Talk, Glimmer, Metallpulver, Kieselsäureaerosol, Kaolin, Calciumcarbonat, Dolomit, Silikate oder Glaskugeln, anorganische oder organische Pigmente, optische Aufheller, Mattierungsmittel, Gleitmittel, Entformungshilfsmittel, kristallisationsfördernde Mittel, Antioxidantien und Lichtschutzmittel. Besonders vorteilhaft ist es, als Costabilisator zusätzlich 0,1 bis 5, vorzugsweise 0,1 bis 3 Gew.-%, bezogen auf den Polyester, eines Phosphates zugegeben. Dieses hat bevorzugt die Formel

$$(R^8O)_3P{=}O$$

worin $R^8$ $C_6$-$C_{18}$-Alkyl, $C_6$-$C_{16}$-Cycloalkyl, $C_6$-$C_{12}$-Aryl, $C_7$-$C_{18}$-Alkaryl oder Aralkyl oder $C_8$-$C_{18}$ Alkaralkyl ist. Aryl ist insbesondere Phenyl. Bevorzugt ist Triphenylphosphat.

Die Formmassen können nach gebräuchlichen Formgebungsverfahren wie Giessen, Pressen, Spritzgiessen und Extrudieren zu Gebrauchsgegenständen aller Art verarbeitet werden. Beispiele für solche Gegenstände sind technische Apparateteile, Apparategehäuse, Haushaltgeräte, Sportgeräte,

Elektroisolationen, Automobilteile, Schaltungen, Platten, Filme und Halbzeuge, die spanabhebend verformt werden können.

Die erfindungsgemässen Formmassen weisen eine überraschend gute Verarbeitungsstabilität auf. Es wird nur noch ein geringer oder gar kein Viskositätsabfall beobachtet. Die Wirkung gegenüber dem Erststabilisator alleine ist erheblich verbessert. Auch bei höheren Verarbeitungstemperaturen wird eine ausgezeichnete Verarbeitungsstabilität beobachtet. Die stabilisierende Wirkung macht sich besonders vorteilhaft schon bei der Einarbeitung durch Umgranulieren bemerkbar.

Die beschriebenen vorzugsweisen Merkmale der erfindungsgemässen Formmassen können selbstverständlich in beliebiger Weise kombiniert sein, soweit die Kombination noch ein technisch sinnvolles Produkt ergibt.

Das nachfolgende Beispiel erläutert die Erfindung näher. Die Intrinsic Viskosität wird an einer Lösung von 1 g Polyester in 100 ml einer 1 : 1 Mischung von 1,1,2,2-Tetrachloräthan und Phenol bei 30 °C bestimmt.

## Beispiel

Polybutylenterephthalat mit einer Intrinsic Viskosität von 1,18 dl/g wird mit der in Tabelle 1 angegebenen Menge an Zusätzen gut vermischt und mittels eines Göttfert-Labor-Tisch-Extruders (20 mm Schnecke) bei 250 °C Zylindertemperatur zu einem stabilisierten Granulat umgeschmolzen. Von diesem Granulat wird die Intrinsic Viskosität bestimmt.

Dieses Granulat wird sodann auf einer Aarburg Spritzgussmaschine zu Normkleinstäben verspritzt und jeweils nach 30 Schuss eine Probe genommen und die Intrinsic Viskosität bestimmt.

Diese Verarbeitung erfolgte einmal bei Zylindertemperaturen von 250 °C und einmal bei Zylindertemperaturen von 270 °C. Die Ergebnisse zeigt die nachfolgende Tabelle. Hierin ist:

A = Bisphenol-A-Epoxidharz mit 0,38 Epoxidäquivalenten/kg

B = 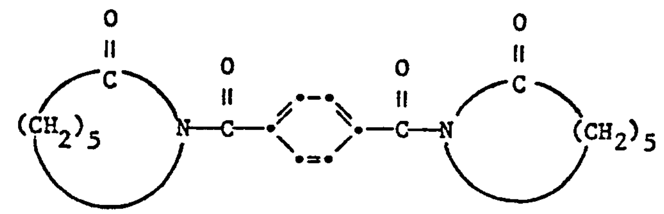

C = 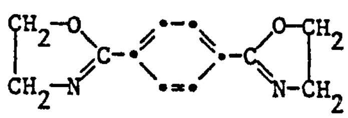

D = Triphenylphosphat

Tabelle

| Zusatz (Gew.-%) | η [dl/g] Granulat | η [dl/g] nach Verarbeitung bei 250°C | 270°C |
|---|---|---|---|
| 1 % A + 0,5 % B | 1,17 | 1,09 | 0,96 |
| 1 % A + 1 % B | 1,17 | 1,23 | 1,00 |
| 1 % A + 2 % B | 1,18 | 1,31 | 1,03 |
| 1 % A + 0,5 % B + 0,5 % C | 1,19 | 1,41 | 1,15 |
| 1 % A + 0,5 % B + 0,5 % D | 1,16 | 1,03 | 1,06 |
| 1 % A + 0,5 % C + 1,0 % D | 1,20 | 1,19 | 1,14 |

**Patentansprüche**

1. Formmasse auf Basis eines thermoplastischen Polyesters, enthaltend wirksame Mengen von mindestens 2 Stabilisatoren, von denen der erste eine Polyepoxidverbindung ist, dadurch gekennzeichnet, daß der erste Stabilisator eine Polyepoxidverbindung mit durchschnittlich mehr als einer Epoxidgruppe im Molekül ist und der zweite zur Gruppe der Bisoxazoline der Formel I

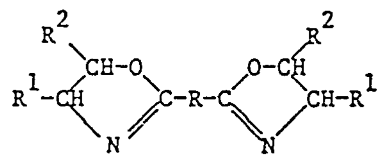

(I)

und der Dicarbonsäure-bis-imide und -bis-amide der Formel II

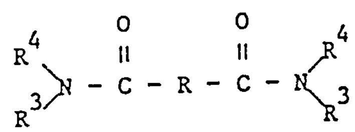

(II)

gehört, worin

R Alkylen, Cycloalkylen, unsubstituiertes oder durch Halogen substituiertes Arylen ist,

$R^1$ und $R^2$ unabhängig voneinander ein Wasserstoffatom, Aryl, Cycloalkyl oder Alkyl bedeuten,

$R^3$ Alkyl, Cycloalkyl, unsubstituiertes oder durch Alkyl oder Halogen substituiertes Aryl oder Aralkyl und $R^4$ Acyl oder $R^3$ und $R^4$ zusammen einen Rest der Formel $—C_nH_{2n}CO—$, worin n eine Zahl von 2 bis 12 ist, bedeuten, oder

$R^3$ und $R^4$ zusammen ein Rest der Formel

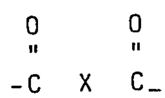

sind, worin X unsubstituiertes oder durch Alkyl substituiertes Aethylen oder Aethenylen oder ein unsubstituierter oder durch Alkyl oder Halogen substituierter carbocyclischer Rest, an den beide Carbonylgruppen in Orthostellung gebunden sind, ist, oder $R^3$ und $R^4$ zusammen einen Rest der Formel

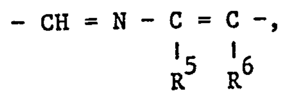

worin $R^5$ und $R^6$ unabhängig voneinander ein Wasserstoffatom, Alkyl, Cycloalkyl, Aryl oder Aralkyl sind, bedeuten.

2. Formmasse gemäss Anspruch 1, dadurch gekennzeichnet, dass der Polyester ein Polyalkylenterephthalat oder ein Copolyester auf der Basis von Polyalkylenterephthalat ist.

3. Formmasse gemäss Anspruch 1, dadurch gekennzeichnet, dass sie den ersten und zweiten Stabilisator jeweils in einer Menge von 0,01 bis 10 Gew.-% enthält, bezogen auf den Polyester.

4. Formmasse gemäss Anspruch 1, dadurch gekennzeichnet, dass die Polyepoxidverbindung eine solche auf der Basis von Bisphenolen ist.

5. Formmasse gemäss Anspruch 1, dadurch gekennzeichnet, dass R in den Formel I und II in seiner Bedeutung als Alkylen 2 bis 12 C-Atome, in seiner Bedeutung als Cycloalkylen 5 bis 7 Ring-C-Atome, in seiner Bedeutung als Arylen 6 bis 12 C-Atome enthält und Halogen in seiner Bedeutung als Substituent Chlor oder Brom ist.

6. Formmasse gemäss Anspruch 1, dadurch gekennzeichnet, dass $R^1$ und $R^2$ in ihrer Bedeutung als Aryl Phenyl, in ihrer Bedeutung als Cycloalkyl Cyclohexyl sind und in ihrer Bedeutung als Alkyl 1 bis 6 C-Atome enthalten.

7. Formmasse gemäss Anspruch 1, dadurch gekennzeichnet, dass $R^3$ in der Bedeutung von Alkyl 1 bis 12 C-Atome, in der Bedeutung von Cycloalkyl 5 bis 7 Ring-C-Atome, in der Bedeutung von unsubstituiertem Aryl 6 bis 12 C-Atome und als Aralkyl 7 bis 12 C-Atome enthält, Alkyl und Halogen in ihrer Bedeutung als Substituenten in $R^3$ 1 bis 6 C-Atome enthalten oder Chlor oder Brom sind, $R^4$ in seiner Bedeutung als Acyl 2 bis 18 C-Atome enthält, n in der Formel $—C_nH_{2n}CO—$ eine Zahl von 3 bis 8 ist, X in der Formel

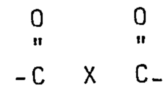

unsubstituiertes oder durch ein oder zwei Alkylgruppen mit 1 bis 12 C-Atomen substituiertes Aethylen, unsubstituiertes oder durch ein oder zwei Alkylgruppen mit 1 bis 6 C-Atomen substituiertes Aethenylen, unsubstituiertes oder durch Alkyl mit 1 bis 6 C-Atomen oder Chlor oder Brom substituiertes Cyclohexylen, Cyclopentylen, Cyclohexenylen, Phenylen oder Naphthylen ist, und $R^5$ und $R^6$ in ihrer Bedeutung als Alkyl 1 bis 6 C-Atome, als Cycloalkyl 5 bis 7 Ring-C-Atome, als Aryl Phenyl und als Aralkyl Benzyl sind.

8. Formmasse gemäss Anspruch 1, dadurch gekennzeichnet, dass als Zweitstabilisator der Formel I ein Bisoxazolin der Formel

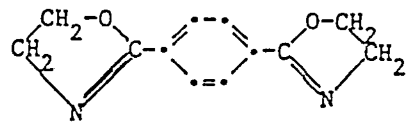

enthalten ist.

9. Formmasse gemäss Anspruch 1, dadurch gekennzeichnet, dass als Zweitstabilisator eine Imidverbindung der Formel

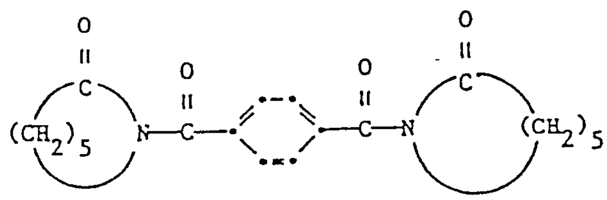

enthalten ist.

## Claims

1. A moulding composition, based on a thermoplastic polyester and containing effective amounts of at least 2 stabilisers, the first of which is a polyepoxide compound, in which composition the first stabiliser is a polyepoxide compound having on average more than one epoxide group per molecule and the second stabiliser is selected from the group comprising the bisoxazolines of the formula I

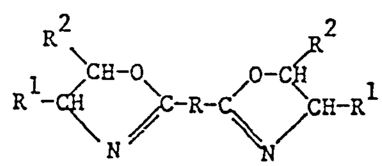

(I)

and the dicarboxylic acid bisimides and bisamides of the formula II

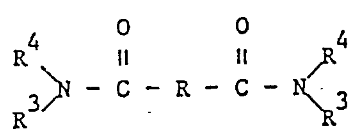

(II)

in which R is alkylene, cycloalkylene, unsubstituted arylene or arylene substituted by halogen, each of $R^1$ and $R^2$ independently of the other is a hydrogen atom, aryl, cycloalkyl or alkyl, $R^3$ is alkyl or cycloalkyl, or is aryl or aralkyl, each unsubstituted or substituted by alkyl or halogen, and $R^4$ is acyl, or $R^3$ and $R^4$ together are a radical of the formula $-C_nH_{2n}CO-$, in which n is a number from 2 to 12, or $R^3$ and $R^4$ together are a radical of the formula

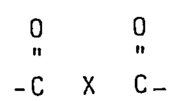

in which X is ethylene or ethenylene, each unsubstituted or substituted by alkyl, or is a carbocyclic radical wich is unsubstituted or substituted by alkyl or halogen and to which both carbonyl groups are bonded in the ortho-position, or $R^3$ and $R^4$ together are a radical of the formula

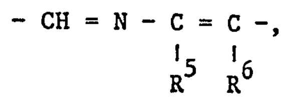

in which each of $R^5$ and $R^6$ independently of the other is a hydrogen atom, alkyl, cycloalkyl, aryl or aralkyl.

2. A moulding composition according to claim 1, wherein the polyester is a polyalkylene terephthalate or a copolyester based on a polyalkylene terephthalate.

3. A moulding composition according to claim 1, which contains the first and the second stabiliser each in a quantity of 0,01 to 10 % by weight, based on the polyester.

4. A moulding composition according to claim 1, wherein the polyepoxide compound is a polyepoxide compound based on bisphenols.

5. A moulding composition according to claim 1, wherein, in the formulae I and II, an alkylene radical R contains 2 to 12 C atoms, a cycloalkylene radical R contains 5 to 7 ring C atoms, an arylene radical R contains 6 to 12 C atoms and a halogen substituent is chlorine or bromine.

6. A moulding composition according to claim 1, wherein aryl radicals $R^1$ and $R^2$ are phenyl, cycloalkyl radicals $R^1$ and $R^2$ are cyclohexyl and alkyl radicals $R^1$ and $R^2$ contain 1 to 6 C atoms.

7. A moulding composition according to claim 1, wherein an alkyl radical $R^3$ contains 1 to 12 C atoms, a cycloalkyl radical $R^3$ contains 5 to 7 ring C atoms, an unsubstituted aryl radical $R^3$ contains 6 to 12 C atoms and an aralkyl radical $R^3$ contains 7 to 12 C atoms, an alkyl substituent in $R^3$ contains 1 to 6 C atoms and a halogen substituent in $R^3$ is chlorine or bromine, an acyl radical $R^4$ contains 2 to 18 C atoms, n in the formula $—C_nH_{2n}CO—$ is a number from 3 to 8, X in the formula

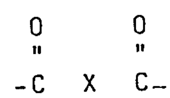

is ethylene which is unsubstituted or monosubstituted or disubstituted by alkyl groups having 1 to 12 C atoms, ethenylene which is unsubstituted or monosubstituted or disubstituted by alkyl groups having 1 to 6 C atoms, or is cyclohexylene, cyclopentylene, cyclohexenylene, phenylene or naphthylene, which are each unsubstituted or substituted by alkyl having 1 to 6 C atoms or by chlorine or bromine, and alkyl radicals $R^5$ and $R^6$ contain 1 to 6 C atoms, cycloalkyl radicals $R^5$ and $R^6$ contain 5 to 7 ring C atoms, aryl radicals $R^5$ and $R^6$ are phenyl and aralkyl radicals $R^5$ and $R^6$ are benzyl.

8. A moulding composition according to claim 1, which contains a bisoxazoline of the formula

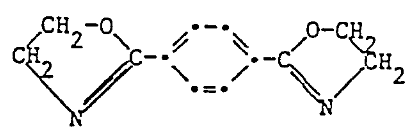

as the second stabiliser of the formula I.

9. A moulding composition according to claim 1, which contains an imide compound of the formula

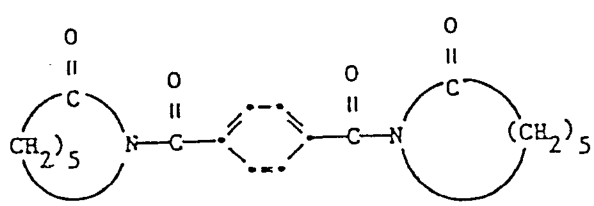

as the second stabiliser.

## Revendications

1. Matière à mouler à base d'un polyester thermoplastique, contenant des quantités efficaces d'au moins deux stabilisants, dont le premier est un composé polyépoxydique, matière à mouler caractérisée en ce que le premier stabilisants est un composé polyépoxydique dont la molécule contient en moyenne plus d'un radical époxy, et le second appartient à l'ensemble constitué par les bis-oxazolines de formule I